Europäisches Patentamt

European Patent Office

Office européen des brevets

(19)

(11) Numéro de publication: **0 390 700**
**A1**

(12) **DEMANDE DE BREVET EUROPEEN**

(21) Numéro de dépôt: **90400881.0**

(22) Date de dépôt: **30.03.90**

(51) Int. Cl.5: **G01N 1/20, G01F 11/08**

(30) Priorité: **31.03.89 FR 8904274**

(43) Date de publication de la demande:
**03.10.90 Bulletin 90/40**

(84) Etats contractants désignés:
**AT BE CH DE DK ES FR GB GR IT LI LU NL SE**

(71) Demandeur: **SOCIETE DU PIPELINE SUD-EUROPEEN**
**195, avenue Charles de Gaulle**
**F-92521 Neuilly-sur-Seine Cédex(FR)**

(72) Inventeur: **Mazoyer, Jean-Pierre, Le Vallon Pont de Rhaud, Cornillon Confoux**
**F-13250 St Chamas(FR)**

(74) Mandataire: **Nony, Michel et al**
**Cabinet NONY & CIE, 29, rue Cambacérès**
**F-75008 Paris(FR)**

(54) **Dispositif de réglage d'échantillonneur de produit liquide.**

(57) L'invention est relative à un dispositif de réglage pour un échantillonneur de produit liquide circulant dans une conduite (1), ledit échantillonneur comprenant un distributeur à quatre voies (4) dont une première voie (7) est agencée pour être reliée à ladite conduite et dont une deuxième voie (8) est reliée à un réservoir (9) d'échantillon, ledit distributeur étant en outre asservi au débit du liquide dans la conduite pour mettre alternativement en communication la première avec la troisième voie et la deuxième avec la quatrième voie, puis la première avec la quatrième voie et la deuxième avec la troisième voie.

Il comprend deux chambres d'écoulement (12, 13) susceptibles d'être reliées respectivement à la troisième et à la quatrième voie du distributeur, et une chambre de réglage (22) séparée par une membrane déformable (21) de chacune des chambres d'écoulement, ladite chambre de réglage étant munie de moyens (26) agencés pour faire varier le volume des chambres d'écoulement par déformation desdites membranes.

Fig. 1

Xerox Copy Centre

## Dispositif de réglage d'échantillonneur de produit liquide.

La présente invention concerne un dispositif de réglage pour un échantillonneur de produit liquide circulant dans une conduite, et plus particulièrement un échantillonneur comprenant un distributeur à quatre voies dont une première voie est agencée pour être reliée à la conduite et dont une deuxième voie est reliée à un réservoir d'échantillon, le distributeur étant en outre asservi au débit du liquide dans la conduite pour mettre alternativement en communication la première avec la troisième voie et la deuxième avec la quatrième voie, puis la première avec la quatrième voie et la deuxième avec la troisième voie.

On connaît déjà de tels échantillonneurs, destinés par exemple à l'échantillonnage de produits pétroliers.

Afin d'obtenir un échantillon représentatif d'un lot donné de produit, on est amené à utiliser un distributeur, par exemple rotatif, dont la vitesse de rotation est asservie au débit du fluide dans la conduite de manière à prélever en permanence la même fraction de ce débit. Le problème est d'obtenir un moyen de réglage facile à utiliser pour prélever toujours la même quantité sur un lot, quel que soit le volume de ce lot.

La présente invention vise à fournir un dispositif de réglage permettant de résoudre ce problème.

A cet effet, l'invention a pour objet un dispositif de réglage du type rappelé ci-dessus, caractérisé par le fait qu'il comprend deux chambres d'écoulement susceptibles d'être reliées respectivement à la troisième et à la quatrième voie du distributeur et une chambre de réglage séparée par une membrane déformable de chacune des chambres d'écoulement, ladite chambre de réglage étant munie de moyens agencés pour faire varier le volume des chambres d'écoulement par déformation desdites membranes.

Ainsi, chaque chambre d'écoulement est alternativement mise en communication par le distributeur, soit avec une arrivée de fluide à échantillonner, soit avec le réservoir d'échantillons. Le volume des chambres d'écoulement pouvant être réglé par déformation des membranes, on peut ainsi déterminer la proportion de fluide prélevée en fonction du volume total du lot de manière à obtenir un volume d'échantillon donné.

La chambre de réglage peut être remplie d'un fluide hydraulique et comprendre au moins une partie formant cylindre dans laquelle est disposé un piston de réglage.

Lorsque l'on enfonce le piston, on provoque un écartement des membranes et par conséquent, une diminution du volume total des deux chambres d'écoulement.

La chambre d'écoulement qui est reliée à l'arrivée de fluide augmente progressivement de volume en repoussant ainsi la membrane qui la sépare de la chambre de réglage et, du fait de l'incompressibilité du fluide hydraulique contenu dans cette dernière, elle repousse la membrane de la chambre reliée au réservoir d'échantillons vidant ainsi progressivement cette chambre dans le réservoir.

De préférence, le piston est fileté et coopère avec un filetage du cylindre pour son réglage.

La tête du piston peut plus particulièrement coopérer avec un vernier qui peut être directement gradué en volume du lot à échantillonner.

Dans un mode de réalisation particulier de l'invention, chaque chambre d'écoulement comprend un conduit d'amenée et de refoulement de fluide formé dans une culasse fixée à un corps contenant la chambre de réglage, la culasse et le corps étant séparés par la membrane correspondante, et au moins un conduit mettant en communication le conduit d'amenée et de refoulement de fluide avec une des faces de la membrane et au moins un autre conduit mettant en communication la chambre de réglage et l'autre face de la membrane.

On décrira maintenant à titre d'exemple non limitatif un mode de réalisation particulier de l'invention en référence aux dessins schématiques annexés dans lesquels :

- la figure 1 représente l'ensemble d'un échantillonneur muni du dispositif de réglage selon l'invention et,

- la figure 2 est une vue en coupe longitudinale de ce dispositif.

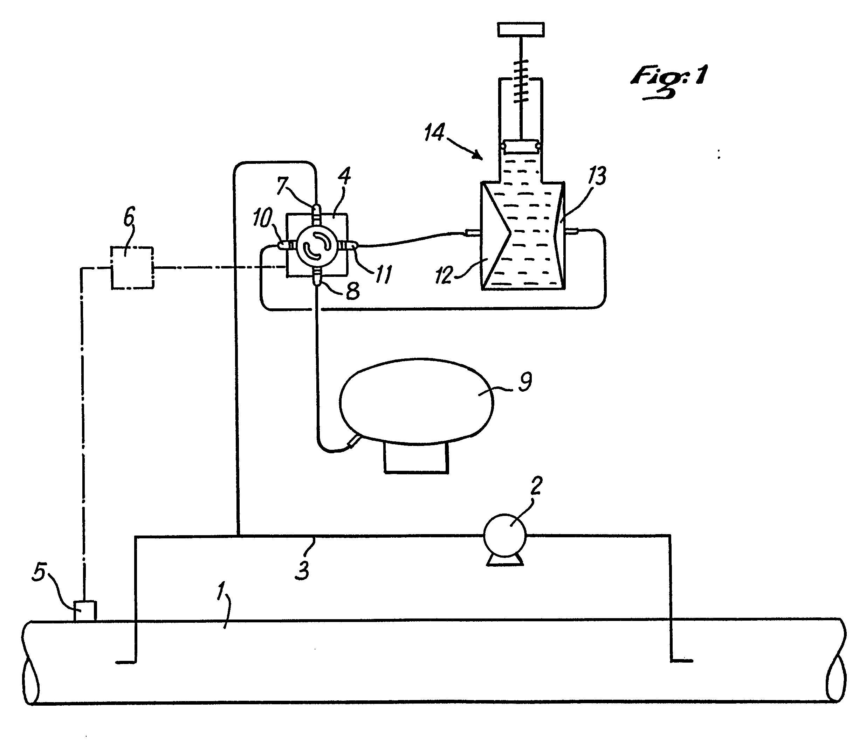

On voit sur la figure 1 une conduite 1 dans laquelle circule un fluide dont on souhaite prélever un échantillon.

A cet effet, une pompe 2 est montée sur un circuit dérivé 3 à partir duquel l'échantillon est prélevé au moyen d'un distributeur rotatif à quatre voies 4 dont la vitesse de rotation est asservie au débit dans la conduite 1 par l'intermédiaire d'un capteur de débit 5 et d'une électronique de commande 6.

La première voie 7 du distributeur 4 est celle par laquelle arrive le fluide échantillon et sa deuxième voie 8 est reliée à un réservoir d'échantillon 9.

La troisième voie 10 et la quatrième voie 11 sont respectivement reliées aux chambres d'écoulement 12 et 13 du dispositif de réglage 14 selon l'invention.

Lorsque le distributeur 4 est dans la position représentée aux dessins, les voies 7 et 11 sont en communication, de même que les voies 8 et 10.

Dans cette position, le fluide d'échantillon arrivant par la voie 7 est transféré à la chambre d'écoulement 12 par l'intermédiaire de la voie 11 tandis que le fluide contenu dans la chambre d'écoulement 13 est transféré au réservoir 9 par l'intermédiaire des voies 10 et 8 du distributeur.

Tous les quart de tour, la situation est inversée, c'est-à-dire qu'au quart de tour suivant, le fluide échantillon arrivant par la voie 7 sera refoulé dans la chambre d'écoulement 13 par la voie 10 tandis que le fluide contenu dans la chambre d'écoulement 12 sera refoulé dans le réservoir 9 par l'intermédiaire des voies 11 et 8 du distributeur.

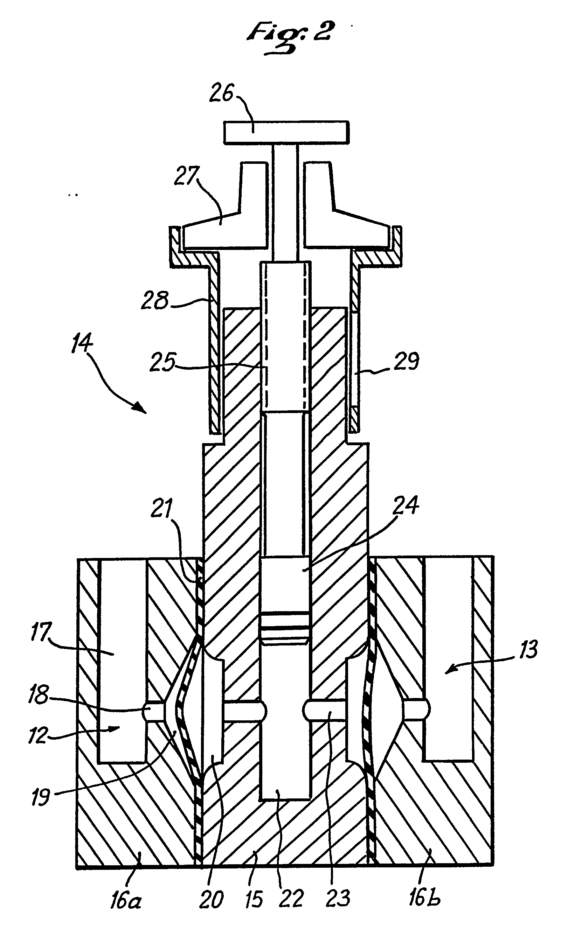

Si l'on se réfère maintenant à la figure 2, on voit que le dispositif de réglage comprend pour l'essentiel un corps 15 et deux culasses 16a et 16b.

La culasse 16a forme une chambre d'écoulement 12 tandis que la culasse 16b forme la chambre d'écoulement 13.

Des raccords non représentés permettent de raccorder les chambres 12 et 13 aux voies 11 et 10 respectivement du distributeur 4.

Chaque chambre d'écoulement comprend en fait un conduit d'amenée et de refoulement de fluide 17 relié par un autre conduit 18 à un renfoncement de forme conique 19 situé en vis-à-vis d'un autre renfoncement 20 du corps 15.

Les culasses 16a et 16b sont fixées au corps 15 par tout moyen convenable, une membrane souple 21 étant interposée entre chaque culasse et le corps.

Le corps forme une chambre de réglage constituée par un cylindre 22, deux conduits 23 faisant communiquer ce cylindre avec les renfoncements 20, ainsi que les deux volumes délimités par le fond des renfoncements 20 et la membrane 21.

Un piston 24 est disposé dans le cylindre 22 dans lequel il peut se déplacer longitudinalement grâce à des filetages coopérants 25 et à un bouton de manoeuvre 26.

Un vernier 27 est monté sur un support de vernier 28 dont la hauteur est réglable à l'aide d'une fente 29 et d'une vis non représentée.

La chambre de réglage est remplie d'un fluide hydraulique incompressible de sorte que lorsque l'on enfonce le piston 24 dans le cylindre 22, le volume de la chambre restant constant, les membranes 21 sont repoussées vers l'extérieur diminuant ainsi le volume des chambres d'écoulement et par conséquent la quantité de fluide transférée dans le réservoir 9 à chaque quart de tour du distributeur 4.

La position du support de vernier 28 étant déterminée une fois pour toutes par étalonnage, le vernier indique par conséquent directement le volume d'un lot qui donnera la quantité d'échantillon souhaitée dans le réservoir 9.

Il suffit donc, connaissant le volume du lot que l'on souhaite échantillonner, de régler la position du piston 24 en tournant le bouton 26 pour obtenir la quantité d'échantillon que l'on souhaite prélever.

Diverses variantes et modifications peuvent bien entendu être apportées à la description qui précède sans sortir pour autant ni du cadre ni de l'esprit de l'invention.

**Revendications**

1 - Dispositif de réglage pour un échantillonneur de produit liquide circulant dans une conduite (1), ledit échantillonneur comprenant un distributeur à quatre voies (4) dont une première voie (7) est agencée pour être reliée à ladite conduite et dont une deuxième voie (8) est reliée à un réservoir (9) d'échantillon, ledit distributeur étant en outre asservi au débit du liquide dans la conduite pour mettre alternativement en communication la première avec la troisième voie et la deuxième avec la quatrième voie, puis la première avec la quatrième voie et la deuxième avec la troisième voie, dispositif caractérisé par le fait qu'il comprend deux chambres d'écoulement (12, 13) susceptibles d'être reliées respectivement à la troisième et à la quatrième voie du distributeur, et une chambre de réglage (22) séparée par une membrane déformable (21) de chacune des chambres d'écoulement, ladite chambre de réglage étant munie de moyens (26) agencés pour faire varier le volume des chambres d'écoulement par déformation desdites membranes.

2 - Dispositif selon la revendication 1, caractérisé par le fait que ladite chambre de réglage est remplie d'un fluide hydraulique et qu'elle comprend au moins une partie (22) formant cylindre dans laquelle est disposé un piston de réglage (24).

3 - Dispositif selon la revendication 2, caractérisé par le fait que ledit piston est fileté et qu'il coopère avec un filetage (25) du cylindre pour son réglage.

4 - Dispositif selon la revendication 3, caractérisé par le fait que la tête du piston coopère avec un vernier (27).

5 - Dispositif selon l'une quelconque des revendications 1 à 4, caractérisé par le fait que chaque chambre d'écoulement comprend un conduit (17) d'amenée et de refoulement de fluide formé dans une culasse (16a, 16b) fixée à un corps (15) contenant la chambre de réglage, la culasse et le carter étant séparés par ladite membrane, et au moins un conduit (18) mettant en communication le conduit d'amenée et de refoulement de fluide avec une des faces de la membrane et au moins un autre conduit (23) mettant en communication la chambre de réglage et l'autre face de la membra-

ne.

Fig.1

*Fig. 2*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A- 814 867 (MILTON ROY CO.)<br>* Page 1, lignes 10-14; page 2, lignes 6-30,81-110; page 3, lignes 16-28; fig. * <br>--- | 1-3 | G 01 N 1/20<br>G 01 F 11/08 |
| A | US-A-3 442 136 (A.B. WILSON, Jr.)<br>* Colonne 1, lignes 21-26,59-66; colonne 2, lignes 27-66; colonne 3, lignes 3-22; figure 1 *<br>--- | 1 | |
| A | GB-A-2 150 116 (KEK HOW NG)<br>* Figures 1-2; résumé; page 1, lignes 83-120; page 2, lignes 44-70; page 2, ligne 130 – page 3, ligne 24 *<br>--- | 1 | |
| A | NL-A- 102 910 (T.M. DE JONG)<br>* Figures 1-3; colonne 2, ligne 45 – colonne 3, ligne 32; colonne 4, lignes 11-23 *<br>--- | 1-4 | |
| A | FR-A-2 450 445 (A. PRATS RIERA)<br>* Figure 1; page 2, ligne 36 – page 4, ligne 4 *<br>--- | 2,3,5 | **DOMAINES TECHNIQUES RECHERCHES (Int. Cl.5)** |
| A | GB-A-2 090 814 (BRITISH PETROLEUM CO., LTD)<br>* Figure 3; page 2, lignes 59-76 *<br>----- | 1 | G 01 N<br>G 01 F |

Le présent rapport a été établi pour toutes les revendications

| Lieu de la recherche | Date d'achèvement de la recherche | Examinateur |
|---|---|---|
| LA HAYE | 06-07-1990 | HOCQUET A.P.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)